# EUROPÄISCHE PATENTSCHRIFT

(11) **EP 3 009 701 B1**
(45) Veröffentlichungstag und Bekanntmachung des Hinweises auf die Patenterteilung: **20.01.2021**
(21) Anmeldenummer: 15001833.1
(22) Anmeldetag: 20.06.2015
(51) Int. Cl.: F16C 41/04, F16C 9/04, F16C 9/02

(54) **BRUCHGETRENNTES BAUTEIL, INSBESONDERE BRUCHGETRENNTES PLEUEL ODER BRUCHGETRENNTER HAUPTLAGERDECKEL EINES KURBELGEHÄUSES EINER BRENNKRAFTMASCHINE**
FRACTURE SPLIT COMPONENT, IN PARTICULAR FRACTURE SPLIT CONNECTING ROD OR FRACTURE SPLIT MAIN BEARING COVER OF A CRANKCASE OF AN INTERNAL COMBUSTION ENGINE
COMPOSANT SÉPARÉ PAR RUPTURE, EN PARTICULIER BIELLE SÉPARÉE PAR RUPTURE OU COUVERCLE DE PALIER PRINCIPAL SÉPARÉ PAR RUPTURE D'UN BOÎTIER DE MANIVELLE D'UN MOTEUR À COMBUSTION INTERNE

(30) Priorität: 07.10.2014 DE 102014014936
(43) Veröffentlichungstag der Anmeldung: 20.04.2016
(73) Patentinhaber: MAN Truck & Bus SE, 80995 München (DE)
(72) Erfinder: Langer, Christoph, 90451 Nürnberg (DE); Schmitt, Maximilian, 96194 Walsdorf (DE)
(74) Vertreter: Liebl, Thomas

(56) Entgegenhaltungen:
- WO-A1-96/40469
- WO-A1-2013/155826
- AT-U1- 4 095
- DE-A1- 10 230 426
- DE-A1- 19 950 140
- DE-C1- 3 806 236
- US-A- 5 051 232
- US-A1- 2004 200 052
- US-A1- 2008 209 708

## Beschreibung

Die Erfindung betrifft ein bruchgetrenntes Bauteil, insbesondere ein bruchgetrenntes Pleuel oder einen bruchgetrennten Hauptlagerdeckel eines Kurbelgehäuses einer Brennkraftmaschine, nach dem Oberbegriff des Patentanspruches 1, ein Verfahren zur Herstellung eines bruchgetrennten Bauteils nach dem Oberbegriff des Patentanspruches 10 sowie ein Fahrzeug, insbesondere ein Nutzfahrzeug, nach Anspruch 16.

Bei modernen Brennkraftmaschinen ist es üblich, bruchgetrennte bzw. gecrackte Bauteile zu verwenden, zum Beispiel bruchgetrennte Pleuel zu verwenden, um eine Kurbelwelle der Brennkraftmaschine mit Kolben der Brennkraftmaschine zu koppeln. Bei der Herstellung eines bruchgetrennten Pleuels wird das Pleuel zunächst in einem ungebrochenen Zustand hergestellt. Anschließend wird das große Pleuelauge bzw. der Pleuelfuß üblicherweise an zwei definiert angeordnetem Bruchbereichen mit Bruchkerben versehen, so dass das Pleuel unter Ausbildung von Bruchflächen an diesen Bruchbereichen gezielt aufgebrochen bzw. aufgetrennt werden kann. Die Bruchbereiche sind dabei derart angeordnet, dass das Pleuel in zwei Teilelemente geteilt und die, im Querschnitt gesehen, kreisförmige Lagerfläche des großen Pleuelauges halbiert wird. Zur Befestigung des Pleuels an der Kurbelwelle der Brennkraftmaschine werden die beiden Teilelemente üblicherweise mittels einer Schraubverbindung wieder verbunden bzw. zusammengesetzt.

Durch das Bruchtrennen bzw. Cracken des Pleuels wird zum einen die Fertigungsgenauigkeit des Pleuels deutlich erhöht, da die beiden Teilelemente, die die Lagerfläche des großen Pleuelauges ausbilden, nicht mehr unabhängig voneinander bzw. separat gefertigt werden müssen. Zudem wird auch die Festigkeit des Pleuels erhöht, da die Kontaktflächen bzw. die Anlageflächen der Teilelemente großflächig aneinander anliegen und somit die Kraftübertragung bzw. Kraftweiterleitung zwischen den Teilelementen nicht unterbrochen wird.

Das zuvor Gesagte gilt analog für bruchgetrennte bzw. gecrackte Hauptlagerdeckel von Kurbelgehäusen von Brennkraftmaschinen.

Aus der DE 10 2008 047 688 A1 ist beispielhaft ein Verfahren zum Bruchtrennen von Werkstücken in Bauteile des Werkstücks bekannt, bei dem mittels einer Materialbearbeitungseinrichtung in einem vorgegebenen Bereich der Bauteile eine Ausnehmung durch Abtragung von Material der Bauteile erzeugt wird. Diese Ausnehmung dient dabei als Rissausgangsstelle zum Bruchtrennen der Bauteile. Im Bereich der Ausnehmung wird das Bauteil hier zudem derart mittels der Materialbearbeitungseinrichtung erwärmt, dass eine Temperatur der Bauteile eine vorgegebene Temperatur nicht übersteigt. Auf diese Weise wird mittels einer einzigen Materialbearbeitungseinrichtung sowohl das Material abgetragen als auch das Bauteil erwärmt. Zudem wird der Wärmeenergieeintrag hier auch derart gesteuert, dass eine gezielte Aufhärtung des Materials erfolgt.

Bei einem bruchgetrennten Bauteil, zum Beispiel einem Pleuel, gibt es jedoch die Problematik, dass die Bruchflächen der Teilelemente des Bauteils sehr empfindlich sind bzw. leicht beschädigt werden können. Eine Beschädigung der Bruchflächen bzw. der Bruchflächenstruktur kann dabei einerseits zu einer Verschlechterung der Festigkeit des zusammengesetzten Bauteils führen. Zudem kann eine Beschädigung der Bruchflächen derart, dass sich Teilbereiche der Bruchfläche bzw. Crackpartikel von den Teilelementen ablösen, beim Zusammensetzen der Teilelemente bzw. bei der Montage des Bauteils dazu führen, dass die Crackpartikel zum Beispiel bei einem Pleuel in die Lagerschalen des großen Pleuelauges gelangen und Lagerschäden verursachen.

Aus der AT 4 095 U1 ist ein bruchgetrenntes Lagergehäuse für eine Kurbelwelle bekannt, wobei eine Klebverbindung anstelle bzw. zusätzlich zu einer Schraubverbindung vorgesehen ist.

Aus der US 2004 200 052 A1 ist ein bruchgetrenntes Pleuel mit einer separaten Schutzkappe aus Kunstsoff bekannt.

Es ist daher Aufgabe der Erfindung, ein bruchgetrenntes Bauteil, insbesondere ein bruchgetrenntes Pleuel oder einen bruchgetrennten Hauptlagerdeckel eines Kurbelgehäuses einer Brennkraftmaschine, und ein Verfahren zur Herstellung eines bruchgetrennten Bauteils, insbesondere eines bruchgetrennten Pleuels oder eines bruchgetrennten Hauptlagerdeckels eines Kurbelgehäuses einer Brennkraftmaschine, bereitzustellen, bei dem bzw. mittels dem eine Beschädigung der Bruchflächenstruktur und/oder ein Ablösen von Teilbereichen der Bruchfläche bzw. von Crack-Partikeln auf einfache und zuverlässige Weise verhindert wird.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein bruchgetrenntes Bauteil, insbesondere ein bruchgetrenntes Pleuel oder ein bruchgetrennter Hauptlagerdeckel eines Kurbelgehäuses, vorgeschlagen, das wenigstens einen definierten Bruchbereich aufweist, an dem das Bauteil unter Ausbildung von einander zugeordneten Bruchflächen derart aufgebrochen und/oder aufgetrennt ist, dass das Bauteil in wenigstens zwei Teilelemente geteilt ist, wobei wenigstens eine, vorzugsweise sämtliche, der einander zugeordneten Bruchflächen wenigstens bereichsweise, vorzugsweise jedoch im Wesentlichen vollständig, mit einer Schutzabdeckung versehen ist. Erfindungsgemäß ist vorgesehen, dass die Schutzabdeckung eine Schichtdicke von wenigstens 1µm und von maximal 20µm aufweist.

Mittels einer derartigen erfindungsgemäßen Lösung wird eine Beschädigung der Bruchflächenstruktur und/oder ein Ablösen von Teilbereichen der Bruchfläche einfach und zuverlässig verhindert, da die Schutzabdeckung eine Art Versiegelung der Bruchfläche ausbildet, die die Bruchfläche vor äußeren Einwirkungen schützt und das die Bruchfläche ausbildende Material zusammenhält.

In einer bevorzugten Ausführung ist die Schutzabdeckung durch eine an der zugeordneten Bruchfläche an- und/oder festhaftende, insbesondere bleibende, Schutzschicht gebildet. Eine derartige Schutzschicht kann grundsätzlich auf unterschiedliche Weise aufgebracht bzw. ausgebildet werden, was nachfolgend noch näher erläutert wird, so dass sich hier konstruktive Spielräume ergeben. Unter einer bleibenden Schutzschicht wird dabei eine Schutzschicht verstanden, die auch beim Zusammenfügen bzw. Zusammensetzen der Teilelemente an der Bruchfläche verbleibt, bzw. dort wenigstens zum Teil verbleibt.

Gemäß einer besonders bevorzugten konkreten Ausgestaltung ist die Schutzschicht durch eine an der zugeordneten Bruchfläche, vorzugsweise konturangepasst, an- und/oder festhaftende, vorzugsweise bleibende, Beschichtung gebildet. Eine derartige Beschichtung kann film- bzw. folienartig bzw. sehr dünn und damit konturangepasst aufgebracht werden, so dass die Kontur der Bruchfläche im Wesentlichen beibehalten wird und die Teilelemente an den einander zugeordneten Bruchflächen auch ohne Beseitigung der Schutzschicht bzw. der Schutzschichten in der gewohnten Weise sicher zusammengesetzt bzw. zusammengefügt werden können.

Besonders bevorzugt ist die Schutzschicht hierbei eine mittels eines Beschichtungsverfahrens hergestellte Beschichtung, bei dem ein definierter Stoff, vorzugsweise ein formloser Stoff, auf die Bruchfläche aufgebracht wird und dort eine, zum Beispiel feste oder elastische oder plastische, Schutzschicht ausbildet. Unter einem formlosen Stoff wird jeder Stoff verstanden, aus dem letztendlich die an der Bruchfläche an- und/oder festhaftende sowie vorzugsweise bleibende Beschichtung hergestellt werden kann. Grundsätzlich könnten dies auch feste, zum Beispiel körnige oder pulverförmige, Stoffe sein, aus bzw. mit denen mittels eines geeigneten Beschichtungsverfahrens die Schutzschicht hergestellt wird. Im Hinblick auf die extrem empfindliche Bruchflächenoberfläche sind jedoch solche Beschichtungsverfahren bevorzugt, bei denen ein gasförmiger und/oder flüssiger und/oder plastischer (im Sinne von streichfähiger oder fließfähiger) Stoff als die Schutzschicht ausbildende Beschichtung auf die Bruchfläche aufgebracht wird.

Die Schutzschicht kann zum Beispiel auf einfache und unkomplizierte Weise durch Aufstreichen, zum Beispiel mittels eines Pinsels, und/oder durch Tauchen, insbesondere durch Eintauchen in den Beschichtungsstoff, erfolgen. Alternativ, gegebenenfalls auch zusätzlich, kann die Schutzschicht, insbesondere für die Ausbildung besonders dünner und/oder gleichmäßiger Schichtdicken, auch durch Sprühen oder durch Aufdampfen oder durch Abscheiden ausgebildet werden. Hierfür werden dann die erforderlichen Gerätschaften entsprechend vorgehalten. In Verbindung mit einem Abscheidevorgang erfolgt besonders bevorzugt ein chemisches oder elektrochemisches Abscheiden, höchst bevorzugt ein galvanisches Beschichten, mit denen auf besonders schonende und funktionssichere Weise die gewünschten Schutzschichten in der gewünschten Dicke hergestellt werden können.

Die Schutzschicht kann aus jedem geeigneten Material bzw. Werkstoff (einschließlich Material- bzw. Werkstoffmischungen bzw. -legierungen) hergestellt werden: So zum Beispiel aus einem metallischen Werkstoff, der dann bevorzugt eine feste Schutzschicht ausbildet, und/oder aus einem Kunststoff, der dann bevorzugt eine feste oder elastische oder plastisch verformbare Schutzschicht ausbildet. Diese Werkstoffe eignen sich vor allem zur Aufbringung mittels Sprühen, Aufdampfen und Abscheiden. Für den Fall, dass die Beschichtung durch einen metallischen Werkstoff gebildet ist, eignen sich insbesondere Beschichtungen, die aus Nickel sind bzw. Nickel aufweisen. Der Vorteil von Nickel liegt darin, dass es sich sehr dünn auftragen lässt und eine sehr gute Korrosionsbeständigkeit aufweist.

Die Schutzschicht kann auch durch ein auf die Bruchfläche aufgebrachtes flüssiges oder pastöses Medium, insbesondere ein Fett und/oder ein Öl, gebildet sein. Das Fett kann insbesondere ein Schmierfett sein, während das Öl insbesondere ein mittel- bis hochviskoses Schmieröl sein kann. Besonders geeignet ist ein Schmieröl mit einer Viskosität nach der Konsistenzklasse nach Walkpenetration von 300 bis 350. Für diese flüssigen bzw. pastösen Medien bzw. "Werkstoffe" eignet sich insbesondere auch eine Beschichtung durch Aufstreichen oder Tauchen, zum Beispiel ein Eintauchen in ein Ölbad oder ein Eintauchen in ein Fett bzw. ein Bestreichen der Bruchfläche mit Öl bzw. Fett. Vor allem in Verbindung mit pastösen Medien, wie zum Beispiel den Fetten, kann die Schutzschicht auch etwas dicker ausgebildet sein, weil diese beim Zusammenfügen bzw. Zusammensetzen der Teilelemente an ihren einander zugeordneten Bruchflächen zur Seite hin herausgedrückt werden und sich die Bruch- bzw. Crackflächen somit ohne weiteres in der gewünschten Weise finden bzw. zusammenfügen lassen und dadurch eine optimale Anlage der Teilelemente und eine hohe Festigkeit des bruchgetrennten Bauteils gewährleistet wird.

Alternativ zu der eben beschriebenen Schutzschicht, insbesondere einer durch eine Beschichtung bzw. durch ein Beschichtungsverfahren gebildeten Schutzschicht, kann die Schutzabdeckung auch durch ein an der zugeordneten Bruchfläche anliegendes und/oder die zugeordnete Bruchfläche überdeckendes, insbesondere umhüllendes, Schutzelement gebildet sein. Ein derartiges, vorzugsweise durch ein separates Bauteil gebildetes Schutzelement, das aus jedem geeigneten Material hergestellt sein kann (siehe vorher), kann auf einfache Weise schnell und funktionssicher an dem jeweils zugeordneten Teilelement festgelegt werden. Die Festlegung erfolgt dabei bevorzugt lösbar, um das Schutzelement gegebenenfalls wieder einfach und schnell von der Bruchfläche entfernen zu können. Weiter erfolgt die Festlegung bevorzugt stoffschlüssig, zum Beispiel mittels einer einfach und preiswert herstellbaren Klebeverbindung. Zudem erfolgt die Festlegung vorzugsweise in einem an die zugeordnete Bruchfläche angrenzenden Bereich des jeweiligen Teilelements. Auch hier ist eine relativ dünne Ausbildung des Schutzelementes vorgesehen, die möglichst dicht an der Bruchfläche anliegt, was sich durch eine dünne Schutzfolie realisieren lässt. Eine derartige Schutzfolie kann zum Beispiel aus einem Kunststoff und/oder einem Metall, zum Beispiel als Leichtmetallfolie, hergestellt sein.

Erfindungsgemäß ist die Schutzabdeckung relativ dünn ausgebildet und weist eine Schichtdicke von wenigstens 1µm und von maximal 20µm, bevorzugt von maximal 10µm, auf. Besonders bevorzugt liegt die Schichtdicke der Schutzabdeckung in etwa im Bereich von 1 µm bis 10 µm. An dieser Stelle sei ausdrücklich erwähnt, dass die letztendlich gewählte Schichtdicke auch sehr stark von der Größe des jeweiligen Bauteils abhängt.

Es versteht sich, dass am bruchgetrennten Bauteil bevorzugt auch wenigstens eine Verbindungseinrichtung vorgesehen ist, mittels der die wieder zusammengesetzten Teilelemente miteinander verbindbar sind. Eine derartige Verbindung kann herkömmlicher Natur sein und ist bevorzugt eine Schraubverbindung.

Die sich mit der erfindungsgemäßen Verfahrensführung und dem ebenfalls beanspruchten Fahrzeug, insbesondere Nutzfahrzeug, ergebenden Vorteile sind im Wesentlichen identisch mit den bereits zuvor ausführlich gewürdigten Vorteilen des erfindungsgemäßen bruchgetrennten Bauteils, sodass diesbezüglich zur Vermeidung von Wiederholungen auf die zuvor gemachten Ausführungen verwiesen wird.

In Verbindung mit der Verfahrensführung soll lediglich noch erwähnt werden, dass es für eine zuverlässige Vermeidung einer Beschädigung der Bruchfläche vorteilhaft ist, wenn die Schutzabdeckung zeitlich gesehen im Wesentlichen unmittelbar nach dem Aufbrechen bzw. Auftrennen des Bauteils auf die Bruchfläche aufgebracht wird. Sofern allerdings nur verhindert werden soll, dass abgelöste Teilbereiche der Bruchflächen bzw. Crackpartikel in bzw. an die angrenzenden Bauteile (zum Beispiel an die Lagerschalen) gelangen, würde es aber auch ausreichend sein, wenn die Schutzabdeckung erst zeitlich später, zum Beispiel auch erst unmittelbar vor dem Zusammensetzen der Teilelemente des bruchgetrennten Bauteils bzw. unmittelbar vor der Montage des bruchgetrennten Bauteils, angebracht werden würde.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: eine schematische Darstellung eines Pleuels als Beispiel eines bruchzutrennenden Bauteils im ungebrochenen Zustand;
- Fig. 2: in einer Darstellung gemäß Fig. 1 das Pleuel im bruchgetrennten Zustand;
- Fig. 3: in einer schematischen Schnittdarstellung das bruchgetrennte Pleuel im montierten Zustand;
- Fig. 4: in einer schematischen Darstellung eine erste Ausführungsform einer Schutzschicht zum Schutz der Bruchflächen des bruchgetrennten Pleuels;
- Fig. 5: in einer Darstellung gemäß Fig. 4 eine zweite Ausführungsform einer Schutzschicht; und
- Fig. 6: in einer Darstellung gemäß Fig. 4 ein Schutzelement zum Schutz der Bruchflächen des bruchgetrennten Pleuels.

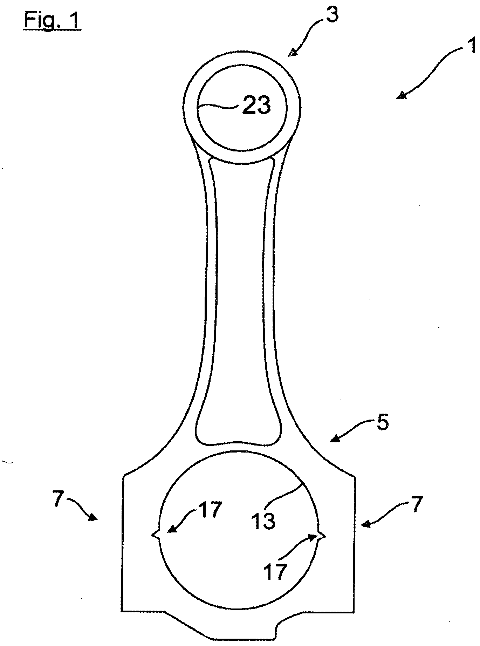

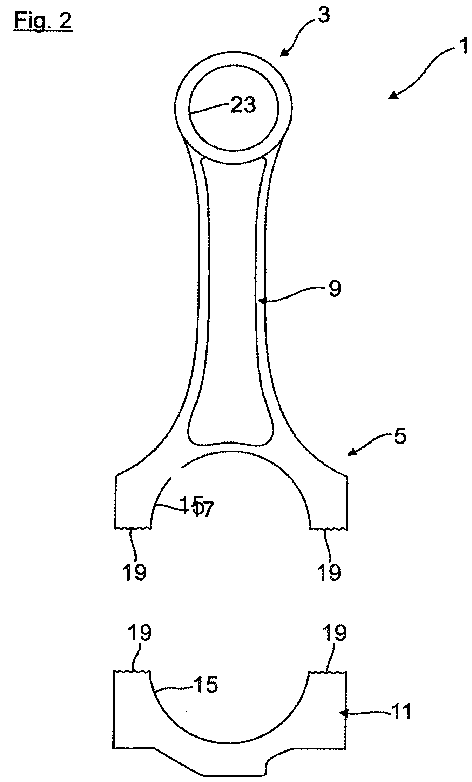

In Fig. 1 ist beispielhaft ein als Pleuel 1 ausgebildetes bruchgetrenntes Bauteil gezeigt, mittels dem eine Kurbelwelle einer Brennkraftmaschine mit einem Kolben der Brennkraftmaschine gekoppelt werden kann. Das Pleuel 1 weist ein kleines Pleuelauge 3 bzw. einen Pleuelkopf auf, mittels dem das Pleuel 1 drehbar an dem Kolben der Brennkraftmaschine festgelegt werden kann. Zudem weist das Pleuel 1 auch ein großes Pleuelauge 5 bzw. einen Pleuelfuß auf, mittels dem das Pleuel 1 drehbar an der Kurbelwelle der Brennkraftmaschine festgelegt werden kann. In Fig. 1 ist das Pleuel 1 in einem einteiligen, ungebrochenen Zustand gezeigt. Zur Festlegung des Pleuels 1 an der Kurbelwelle der Brennkraftmaschine wird das Pleuel 1 bzw. das große Pleuelauge 5 des Pleuels 1 zunächst bruchgetrennt. Dabei wird das große Pleuelauge 5 hier beispielhaft an zwei definiert angeordneten Bruchbereichen 7 derart aufgebrochen bzw. aufgetrennt, dass das Pleuel 1 in zwei Teilelemente 9, 11 (Fig. 2) geteilt wird. Die Bruchbereiche 7 sind dabei derart an dem Pleuel 1 angeordnet, dass eine, im Querschnitt gesehen, kreisförmige Lagerfläche 13 des großen Pleuelauges 5 in etwa halbiert bzw. in zwei in etwa halbkreisförmige Halbkreis-Lagerflächen 15 (Fig. 2) geteilt wird. Die gezielte Anordnung der Bruchbereiche 7 an dem großen Pleuelauge 5 des Pleuelsl erfolgt hier zum Beispiel mittels an der Lagerfläche 13 ausgebildeter Kerben 17.

In Fig. 2 ist das Pleuel 1 im aufgebrochenem bzw. aufgetrenntem Zustand gezeigt. Dabei sind Crack- bzw. Bruchflächen 19 der Teilelemente 9, 11 des Pleuels 1 erkennbar, die durch das Aufbrechen bzw. Auftrennen des Pleuels 1 entstanden sind. Die jeweils korrespondierenden Bruchflächen 19 weisen zueinander passende Oberflächenstrukturen auf, wodurch die Teilelemente 9, 11 bei einem Zusammensetzten des Pleuels 1, im Wesentlichen dem ungebrochenen Zustand entsprechend, mit einer großen Anlagefläche bzw. Kontaktfläche aneinander anliegen.

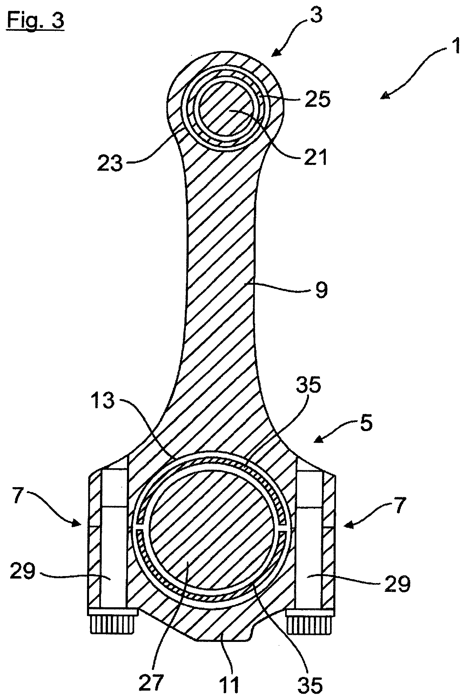

In Fig. 3 ist das Pleuel 1 im montierten Zustand gezeigt. Dabei ist ein Bolzen 21 des Kolbens der Brennkraftmaschine durch das kleine Pleuelauge 3 des Pleuels 1 geführt. In Radialrichtung gesehen, zwischen dem Bolzen 21 und einer Lagerfläche 23 des kleines Pleuelauges 3 ist zudem ein, ein Gleitlager ausbildender Lagerring 25 angeordnet. Die Teilelemente 9, 11 des Pleuels 1 sind hier nun wieder derart zusammengesetzt bzw. verbunden, dass diese mit dem Pleuelauge 5 eine Kurbelwelle 27 der Brennkraftmaschine umschließen. Die Verbindung der Teilelemente 9, 11 des Pleuels 1 erfolgt hier mittels zweier Schrauben 29, die die Teilelemente 9, 11 gegeneinander verspannen. In Radialrichtung gesehen, zwischen der Kurbelwelle 27 und der Lagerfläche 13 des großen Pleuelauges 5 sind zudem zwei ein Gleitlager ausbildende Lagerschalen 35 eingesetzt. Die Bauteile sind hier nur aus Übersichtlichkeitsgründen mit einem Abstand gezeichnet. Es versteht sich, dass die Lager 25, 35 sowie der Bolzen 21 und die Kurbelwelle 27 in der Praxis in einer Anlageverbindung aneinanderliegen.

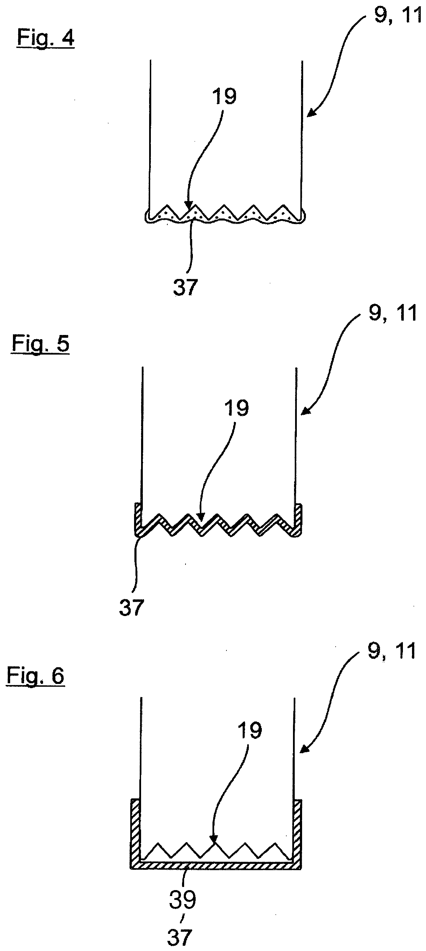

Wie in Fig. 4 in einer schematischen und aus Darstellungsgründen übertrieben großen Weise gezeigt ist, können die Bruchflächen 19 der Teilelementen 9, 11, bevor die Teilelemente 9, 11 des Pleuels 1 wieder zusammengesetzt bzw. verbunden werden, zum Beispiel in ein an den Bruchflächen 19 haftenbleibendes Fett oder Öl getaucht werden bzw. ein Fett oder Öl auf die Bruchflächen 19 aufgetragen, zum Beispiel aufgepinselt, werden. Die an den Bruchflächen 19 anhaftende Fett- oder Ölschicht bildet dann eine Schutzschicht 37 aus, mittels der eine Beschädigung der Bruchflächenstruktur und ein Ablösen von Teilbereichen der Bruchfläche bzw. von Crackpartikeln zuverlässig verhindert werden kann. Eine Beschädigung der Bruchflächenstruktur kann beispielsweise zu einer Verringerung der Festigkeit des zusammengesetzten Pleuels 1 führen. Ein Ablösen von Teilbereichen der Bruchflächen 19 bzw. von Crackpartikeln bei der Montage des Pleuels 1 kann beispielsweise dazu führen, dass die abgelösten Teilbereiche der Bruchflächen 19 bzw. die Crackpartikel an die Lagerschalen 35 gelangen und Lagerschäden verursachen. Beim Zusammensetzen bzw. Verbinden der Teilelemente 9, 11 des Pleuels 1 wird das die Schutzschicht 37 ausbildende Fett oder Öl von den Teilelementen 9, 11 wenigstens zum Teil verdrängt, so dass sich die zusammengehörenden bzw. einander zugeordneten Bruchflächen 19 leicht in der gewünschten Weise zusammenfinden können und somit die Teilelemente 9, 11 optimal aneinander anliegen.

An dieser Stelle sei ausdrücklich erwähnt, dass anstelle eines Öls oder eines Fettes auch jedwedes andere geeignete Medium, insbesondere in Form eines Fluids oder als pastöses Medium, zur Versiegelung verwendet werden kann.

In Fig. 5 ist eine zweite alternative Ausführungsform der Schutzschicht 37 gezeigt. Auch hier ist aus Darstellungsgründen die Bruchfläche 19 und die Schutzschicht 37 wiederum übertrieben groß dargestellt. Die Schutzschicht 37 ist hier durch eine, vorzugsweise extrem dünne, film- bzw. folienartige Beschichtung gebildet, die mittels eines Beschichtungsverfahrens hergestellt wird, bei dem ein bevorzugt gasförmiger und/oder flüssiger und/oder plastischer Stoff, insbesondere ein Metall (zum Beispiel Nickel oder eine Nickel aufweisende Werkstoffzusammensetzung) und/oder ein Kunststoff, durch Sprühen oder durch Aufdampfen oder durch Abscheiden, bevorzugt durch chemisches oder elektrochemisches Abscheiden, insbesondere durch galvanisches Beschichten, auf die Bruchfläche 19 aufgebracht wird und dort eine vorzugsweise feste Schutzschicht ausbildet. Die Schutzschicht 37 weist dabei eine Schichtdicke von maximal 20µm, bevorzugt eine Schichtdicke von maximal 10µm, und eine Schichtdicke von wenigstens 1µm auf. Besonders bevorzugt liegt die Schichtdicke dabei in etwa im Bereich von 1µm bis 10µm.

Gemäß einer in der Fig. 6 schematisch gezeigten alternativen Ausführungsform (auch wieder aus Darstellungsgründen übertrieben groß dargestellt) kann die Schutzabdeckung aber auch durch eine als separates Bauteil lösbar an dem jeweils zugeordneten Teilelement 9, 11 festgelegte Schutzfolie 39 als Schutzelement gebildet sein. Die ebenfalls extrem dünne Schutzfolie 39 (und maximal 20µm, bevorzugt maximal 10µm, und wenigstens 1µm) ist hier beispielhaft wenigstens bereichsweise klebstoffbeschichtet (nicht dargestellt) und damit mittels einer Klebeverbindung stoffschlüssig an den an die Bruchfläche 19 angrenzenden Bereichen festgelegt. Die Schutzfolie 39 ist zum Beispiel aus einem Kunststoffmaterial hergestellt.

Die schematischen Darstellungen der Fig. 4 bis 6 zeigen, dass mit einer erfindungsgemäßen Versiegelung der Bruchflächen 19 auf funktionssichere Weise eine Beschädigung der Bruchflächenstruktur und/oder ein Ablösen von Teilbereichen bzw. dort vorhandenen und hier nicht dargestellten Crackpartikeln der Bruchfläche 19 verhindert werden kann.

### Bezugszeichenliste

- 1: Pleuel
- 3: kleines Pleuelauge
- 5: großes Pleuelauge
- 7: Bruchbereich
- 9: erstes Teilelement
- 11: zweites Teilelement
- 13: Lagerfläche
- 15: Halbkreis-Lagefläche
- 17: Kerbe
- 19: Bruchfläche
- 21: Bolzen
- 23: Lagerfläche
- 25: Lagerring
- 27: Kurbelwelle
- 29: Schraube
- 35: Lagerschale
- 37: Schutzschicht
- 39: Schutzfolie

## Patentansprüche

1. Bruchgetrenntes Bauteil, insbesondere bruchgetrenntes Pleuel oder bruchgetrennter Hauptlagerdeckel eines Kurbelgehäuses, wobei das bruchgetrennte Bauteil (1) wenigstens einen definierten Bruchbereich (7) aufweist, an dem das Bauteil (1) unter Ausbildung von einander zugeordneten Bruchflächen (19) derart aufgebrochen und/oder aufgetrennt ist, dass das Bauteil (1) in wenigstens zwei Teilelemente (9, 11) geteilt ist, wobei wenigstens eine, vorzugsweise sämtliche, der einander zugeordneten Bruchflächen (19), insbesondere zur Verhinderung einer Beschädigung der Bruchflächenstruktur und/oder eines Ablösens von Teilbereichen der Bruchfläche (19), wenigstens bereichsweise mit einer Schutzabdeckung (37; 39) versehen ist, **dadurch gekennzeichnet, dass** die Schutzabdeckung (37; 39) eine Schichtdicke von wenigstens 1µm und von maximal 20µm aufweist.

2. Bruchgetrenntes Bauteil nach Anspruch 1, **dadurch gekennzeichnet, dass** die Schutzabdeckung (37; 39) durch eine an der zugeordneten Bruchfläche an- und/oder festhaftende, vorzugsweise bleibende, Schutzschicht (37) gebildet ist, wobei bevorzugt vorgesehen ist, dass die Schutzschicht (37) durch eine an der zugeordneten Bruchfläche (19), vorzugsweise konturangepasst, an- und/oder festhaftende, vorzugsweise bleibende, Beschichtung gebildet ist.

3. Bruchgetrenntes Bauteil nach Anspruch 2, **dadurch gekennzeichnet, dass** die Schutzschicht (37) eine mittels eines Beschichtungsverfahrens hergestellte Beschichtung ist, mittels dem ein definierter Stoff, bevorzugt ein formloser Stoff, höchst bevorzugt ein gasförmiger und/oder flüssiger und/oder plastischer Stoff, auf die Bruchfläche (19) aufbringbar ist.

4. Bruchgetrenntes Bauteil nach Anspruch 3, **dadurch gekennzeichnet, dass** die Schutzschicht (37) durch Aufstreichen oder durch Tauchen oder durch Sprühen oder durch Aufdampfen oder durch Abscheiden, bevorzugt durch chemisches oder elektrochemisches Abscheiden, höchst bevorzugt durch galvanisches Beschichten, gebildet ist.

5. Bruchgetrenntes Bauteil nach einem der Ansprüche 2 bis 4, **dadurch gekennzeichnet, dass** die Schutzschicht (37) aus einem metallischen Werkstoff, insbesondere aus oder mit Nickel, und/oder aus einem Kunststoff gebildet ist oder dass die Schutzschicht (37) durch ein auf die Bruchfläche aufgebrachtes flüssiges oder pastöses Medium, insbesondere ein Fett und/oder ein Öl, gebildet ist.

6. Bruchgetrenntes Bauteil nach Anspruch 1, **dadurch gekennzeichnet, dass** die Schutzabdeckung durch ein an der zugeordneten Bruchfläche (19) anliegendes und/oder die zugeordnete Bruchfläche überdeckendes, insbesondere umhüllendes, als Schutzfolie (39) gebildetes Schutzelement gebildet ist.

7. Bruchgetrenntes Bauteil nach Anspruch 6, **dadurch gekennzeichnet, dass** das Schutzelement (39), vorzugsweise als separates Bauteil und/oder stoffschlüssig und/oder lösbar, an dem jeweils zugeordneten Teilelement (9, 11) festgelegt ist, vorzugsweise in einem an die zugeordnete Bruchfläche (19) angrenzenden Bereich des jeweiligen Teilelementes (9, 11) festgelegt ist.

8. Bruchgetrenntes Bauteil nach einem der vorhergehenden Ansprüche, **dadurch gekennzeichnet, dass** die Schichtdicke der Schutzabdeckung (37; 39) im Bereich von 1µm bis 10µm liegt.

9. Bruchgetrenntes Bauteil nach einem der vorhergehenden Ansprüche, **dadurch gekennzeichnet, dass** wenigstens eine Verbindungseinrichtung (29) vorgesehen ist, mittels der die wieder zusammengesetzten Teilelemente (9, 11) des Bauteils (1) miteinander verbindbar sind.

10. Verfahren zur Herstellung eines bruchgetrennten Bauteils, bei dem das ungebrochene Bauteil (1) an wenigstens einem definierten Bruchbereich (7) unter Ausbildung von einander zugeordneten Bruchflächen (19) derart aufgebrochen und/oder aufgetrennt wird, dass das Bauteil (1) in wenigstens zwei Teilelemente (9, 11) geteilt wird, wobei nach dem Aufbrechen und/oder Auftrennen des Bauteils (1) wenigstens eine, vorzugsweise sämtliche, der einander zugeordneten Bruchflächen (19), insbesondere zur Verhinderung einer Beschädigung der Bruchflächenstruktur und/oder eines Ablösens von Teilbereichen der Bruchfläche (19), wenigstens bereichsweise mit einer Schutzabdeckung (37; 39) versehen wird, **dadurch gekennzeichnet, dass** die Schutzabdeckung (37; 39) mit einer Schichtdicke von wenigstens 1µm und von maximal 20µm ausgebildet wird.

11. Verfahren nach Anspruch 10, **dadurch gekennzeichnet, dass** die Schutzabdeckung (37; 39) durch eine an der zugeordneten Bruchfläche an- und/oder festhaftende, vorzugsweise bleibende, Schutzschicht (37) gebildet wird, wobei bevorzugt vorgesehen ist, dass die Schutzschicht (37) durch eine an der zugeordneten Bruchfläche (19), vorzugsweise konturangepasst, an- und/oder festhaftende, vorzugsweise bleibende, Beschichtung gebildet wird.

12. Verfahren nach Anspruch 11, **dadurch gekennzeichnet, dass** die Schutzschicht (37) mittels eines Beschichtungsverfahrens hergestellt wird, bei dem ein definierter Stoff, bevorzugt ein formloser Stoff, höchst bevorzugt ein gasförmiger und/oder flüssiger und/oder plastischer Stoff, auf die Bruchfläche (19) aufgebracht wird, wobei bevorzugt vorgesehen ist, dass die Schutzschicht (37) durch Aufstreichen oder durch Tauchen oder durch Sprühen oder durch Aufdampfen oder durch Abscheiden, bevorzugt durch chemisches oder elektrochemisches Abscheiden, höchst bevorzugt durch galvanisches Beschichten, ausgebildet wird.

13. Verfahren nach Anspruch 11 oder 12, **dadurch gekennzeichnet, dass** die Schutzschicht (37) aus einem metallischen Werkstoff, insbesondere aus oder mit Nickel, und/oder aus einem Kunststoff gebildet ist oder dass die Schutzschicht (37) durch ein auf die Bruchfläche aufgebrachtes flüssiges oder pastöses Medium, insbesondere ein Fett und/oder ein Öl, gebildet ist.

14. Verfahren nach Anspruch 10, **dadurch gekennzeichnet, dass** die Schutzabdeckung durch ein an der zugeordneten Bruchfläche (19) anliegendes und/oder die zugeordnete Bruchfläche überdeckendes, insbesondere umhüllendes, als Schutzfolie (39) gebildetes Schutzelement gebildet ist, wobei bevorzugt vorgesehen ist, dass das Schutzelement (39), vorzugsweise stoffschlüssig, an dem jeweils zugeordneten Teilelement (9, 11) festgelegt wird, vorzugsweise in einem an die zugeordnete Bruchfläche (19) angrenzenden Bereich des jeweiligen Teilelementes (9, 11) festgelegt wird.

15. Verfahren nach einem der Ansprüche 10 bis 14, **dadurch gekennzeichnet, dass** die Schutzabdeckung (37; 39) mit einer Schichtdicke von 1µm bis 10µm ausgebildet wird.

16. Fahrzeug, insbesondere Nutzfahrzeug, mit einer Brennkraftmaschine, die wenigstens ein als Pleuel und/oder als Hauptlagerdeckel eines Kurbelgehäuses ausgebildetes bruchgetrenntes Bauteil nach einem der Ansprüche 1 bis 9 aufweist.

## Claims

1. A fracture-split component, in particular fracture-split connecting rod or fracture-split main bearing cover of a crankcase, wherein the fracture-split component (1) has at least one defined fracture region (7) at which the component (1) is fractured and/or split so as to form mutually associated fracture surfaces (19) such that the component (1) is divided into at least two partial elements (9, 11), wherein at least one, preferably all, of the mutually associated fracture surfaces (19) is equipped at least in regions with a protective cover (37; 39), in particular for the purposes of preventing damage to the fracture surface structure and/or a detachment of partial regions of the fracture surface (19), **characterized in that** the protective cover (37; 39) has a layer thickness of at least 1 µm and of at most 20 µm.

2. The fracture-split component according to Claim 1, **characterized in that** the protective cover (37; 39) is formed by a preferably permanent protective layer (37) which adheres and/or sticks to the associated fracture surface, wherein it is preferably provided that the protective layer (37) is formed by a preferably permanent coating which adheres and/or sticks to the associated fracture surface (19) preferably in a manner adapted to the contour.

3. The fracture-split component according to Claim 2, **characterized in that** the protective layer (37) is a coating produced by means of a coating process by means of which a defined substance, preferably an amorphous substance, most preferably a gaseous and/or liquid and/or plastic substance, can be applied to the fracture surface (19).

4. The fracture-split component according to Claim 3, **characterized in that** the protective layer (37) is formed by brush application or by dipping or by spraying or by evaporation deposition or by precipitation, preferably by chemical or electrochemical precipitation, most preferably by galvanic coating.

5. The fracture-split component according to any of Claims 2 to 4, **characterized in that** the protective layer (37) is formed from a metallic material, in particular from or with nickel, and/or from a plastic, or **in that** the protective layer (37) is formed by a liquid or pasty medium applied to the fracture surface, in particular a grease and/or an oil.

6. The fracture-split component according to Claim 1, **characterized in that** the protective cover is formed by a protective element which is formed as a protective film (39) and which lies against the associated fracture surface (19) and/or covers, in particular encases, the associated fracture surface.

7. The fracture-split component according to Claim 6, **characterized in that** the protective element (39) is fixed, preferably as a separate component and/or in cohesive and/or detachable fashion, to the respectively associated partial element (9, 11), preferably in a region of the respective partial element (9, 11) adjacent to the associated fracture surface (19).

8. The fracture-split component according to any of the preceding claims, **characterized in that** the layer thickness of the protective cover (37; 39) lies in the range from 1 µm to 10 µm.

9. The fracture-split component according to any of the preceding claims, **characterized in that** at least one connecting device (29) is provided by means of which the partial elements (9, 11) of the component (1) which have been assembled again can be connected to one another.

10. A method for producing a fracture-split component, in which method the unfractured component (1) is, at at least one defined fracture region (7), fractured and/or split so as to form mutually associated fracture surfaces (19) such that the component (1) is divided into at least two partial elements (9, 11), wherein, after the fracturing and/or splitting of the component (1), at least one, preferably all, of the mutually associated fracture surfaces (19) is equipped at least in regions with a protective cover (37; 39), in particular for the purposes of preventing damage to the fracture surface structure and/or a detachment of partial regions of the fracture surface (19), **characterized in that** the protective cover (37; 39) is formed with a layer thickness of at least 1 µm and of at most 20 µm.

11. The method according to Claim 10, **characterized in that** the protective cover (37; 39) is formed by a preferably permanent protective layer (37) which adheres and/or sticks to the associated fracture surface, wherein it is preferably provided that the protective layer (37) is formed by a preferably permanent coating which adheres and/or sticks to the associated fracture surface (19) preferably in a manner adapted to the contour.

12. The method according to Claim 11, **characterized in that** the protective layer (37) is produced by means of a coating process in which a defined substance, preferably an amorphous substance, most preferably a gaseous and/or liquid and/or plastic substance, can be applied to the fracture surface (19), wherein it is preferably provided that the protective layer (37) is formed by brush application or by dipping or by spraying or by evaporation deposition or by precipitation, preferably by chemical or electrochemical precipitation, most preferably by galvanic coating.

13. The method according to Claim 11 or 12, **characterized in that** the protective layer (37) is formed from a metallic material, in particular from or with nickel, and/or from a plastic, or **in that** the protective layer (37) is formed by a liquid or pasty medium applied to the fracture surface, in particular a grease and/or an oil.

14. The method according to Claim 10, **characterized in that** the protective cover is formed by a protective element which is formed as a protective film (39) and which lies against the associated fracture surface (19) and/or covers, in particular encases, the associated fracture surface, wherein it is preferably provided that the protective element (39) is fixed, preferably in cohesive fashion, to the respectively associated partial element (9, 11), preferably in a region of the respective partial element (9, 11) adjacent to the associated fracture surface (19).

15. The method according to any of Claims 10 to 14, **characterized in that** the protective cover (37; 39) is formed with a layer thickness of 1 µm to 10 µm.

16. A vehicle, in particular utility vehicle, having an internal combustion engine which has at least one fracture-split component according to any of Claims 1 to 9 formed as a connecting rod and/or as a main bearing cover of a crankcase.

## Revendications

1. Composant cassé, en particulier bielle cassée ou capot de palier principal cassé d'un carter de vilebrequin, le composant cassé (1) comportant au moins une zone de cassure définie (7) au niveau de laquelle le composant (1) est cassé et/ou séparé avec formation de surfaces de cassure (19), associées les unes aux autres, de façon à diviser le composant (1) en au moins deux sous-éléments (9, 11), au moins une, de préférence la totalité, des surfaces de cassure (19) associées les unes aux autres, en particulier pour éviter l'endommagement de la structure de surface de cassure et/ou le détachement de zones partielles de la surface de cassure (19), étant pourvues au moins par endroits d'un capot de protection (37 ; 39), **caractérisé en ce que** le capot de protection (37 ; 39) a une épaisseur de couche d'au moins 1 µm et de 20 µm maximum.

2. Composant cassé selon la revendication 1, **caractérisé en ce que** le capot de protection (37 ; 39) est formé par une couche de protection (37) adhérant et/ou adhérant de manière fixe, de préférence en permanence, à la surface de cassure associée, la couche de protection (37) étant de préférence prévue de façon à être formée par un revêtement adhérant et/ou adhérant de manière fixe, de préférence en permanence, à la surface de cassure associée (19), de préférence en étant adapté au contour.

3. Composant cassé selon la revendication 2, **caractérisé en ce que** la couche de protection (37) est un revêtement, réalisé au moyen d'un procédé de revêtement, au moyen duquel une substance définie, de préférence une substance informe, de manière préférée entre toutes une substance gazeuse et/ou liquide et/ou plastique, peut être appliquée sur la surface de cassure (19).

4. Composant cassé selon la revendication 3, **caractérisé en ce que** la couche de protection (37) est formée par brossage sur ou par trempage ou par pulvérisation ou par dépôt en phase vapeur ou par dépôt, de préférence par dépôt chimique ou électrochimique, de manière préférée entre toutes par galvanoplastie.

5. Composant cassé selon l'une des revendications 2 à 4, **caractérisée en ce que** la couche de protection (37) est formée à partir d'un matériau métallique, notamment du nickel, ou comprenant du nickel, et/ou d'une matière synthétique, ou **en ce que** la couche de protection (37) est formée par un milieu liquide ou pâteux appliqué sur la surface de cassure, en particulier une graisse et/ou une huile.

6. Composant cassé selon la revendication 1, **caractérisé en ce que** le capot de protection est formé par un élément de protection réalisé sous la forme d'un film de protection (39) en appui sur la surface de cassure associée (19) et/ou recouvrant, notamment enveloppant, la surface de cassure associée.

7. Composant cassé selon la revendication 6, **caractérisé en ce que** l'élément de protection (39) est fixé, de préférence en tant que composant séparé et/ou par liaison de matière et/ou de manière amovible, au sous-élément respectif associé (9, 11), de préférence dans une zone du sous-élément respectif (9, 11) qui est adjacente à la surface de cassure associée (19).

8. Composant cassé selon l'une des revendications précédentes, **caractérisé en ce que** l'épaisseur de couche du capot de protection (37 ; 39) est dans la gamme allant de 1 µm à 10 µm.

9. Composant cassé selon l'une des revendications précédentes, **caractérisé en ce que** au moins un dispositif de liaison (29) est prévu qui permet de relier entre eux les sous-éléments assemblés (9, 11) du composant (1).

10. Procédé de fabrication d'un composant cassé, procédé dans lequel le composant non cassé (1) est cassé et/ou séparé au niveau d'au moins une zone de cassure définie (7) avec formation de surfaces de cassure (19), associées les unes aux autres, de façon à diviser le composant (1) en au moins deux sous-éléments (9, 11), après cassure et/ou séparation du composant (1) au moins une, de préférence la totalité, des surfaces de cassure (19), associées les unes aux autres, étant pourvues au moins par endroits d'un capot de protection (37 ; 39) en particulier pour éviter l'endommagement de la structure de surface de cassure et/ou le détachement de zones partielles de la surface de cassure (19), **caractérisé en ce que** le capot de protection (37 ; 39) est formé avec une épaisseur de couche d'au moins 1 µm et de 20 µm maximum.

11. Procédé selon la revendication 10, **caractérisé en ce que** le capot de protection (37 ; 39) est formé par une couche de protection (37) adhérant et/ou adhérant de manière fixe, de préférence en permanence, à la surface de cassure associée, la couche de protection (37) étant de préférence prévue de façon à être formée par un revêtement adhérant et/ou adhérant de manière fixe, de préférence en permanence, à la surface de cassure associée (19), de préférence en étant adapté au contour.

12. Procédé selon la revendication 11, **caractérisé en ce que** la couche de protection (37) est réalisée au moyen d'un procédé de revêtement dans lequel une substance définie, de préférence une substance informe, de manière préférée entre toutes une substance gazeuse et/ou liquide et/ou plastique, est appliquée sur la surface de cassure (19), la couche de protection (37) étant de préférence prévue de manière à être formée par brossage sur ou par trempage ou par pulvérisation ou par vaporisation ou par dépôt, de préférence par dépôt chimique ou électrochimique, de manière préférée entre toutes par revêtement galvanique.

13. Procédé selon la revendication 11 ou 12, **caractérisé en ce que** la couche de protection (37) est formée à partir d'un matériau métallique, notamment du nickel, ou comprenant du nickel, et/ou d'une matière synthétique, ou **en ce que** la couche de protection (37) est formée par un milieu liquide ou pâteux appliqué sur la surface de cassure, en particulier une graisse et/ou une huile.

14. Procédé selon la revendication 10, **caractérisé en ce que** le capot de protection est formé par un élément de protection réalisé sous la forme d'un film de protection (39) en appui sur la surface de cassure associée (19) et/ou recouvrant, notamment enveloppant, la surface de cassure associée, l'élément de protection (39) étant prévu de préférence pour être fixé de préférence par liaison de matière au sous-élément respectif associé (9, 11), de préférence dans une zone du sous-élément respectif (9, 11) qui est adjacente à la surface de cassure associée (19).

15. Procédé selon l'une des revendications 10 à 14, **caractérisé en ce que** le capot de protection (37 ; 39) est formé avec une épaisseur de couche allant de 1 µm à 10 µm.

16. Véhicule, en particulier véhicule utilitaire, comprenant un moteur à combustion interne qui comporte au moins un composant cassé conçu comme une bielle et/ou comme un capot de palier principal d'un carter de vilebrequin selon l'une des revendications 1 à 9.
